# EUROPÄISCHE PATENTANMELDUNG

(11) **EP 4 227 243 A1**
(43) Veröffentlichungstag der Anmeldung: **16.08.2023**
(21) Anmeldenummer: 22156045.1
(22) Anmeldetag: 10.02.2022
(51) Int. Cl.: B65G 1/04, B65D 19/00

(54) **REGAL-HUBFÖRDERER MIT VEREINZELUNG VON LADEGUT IN EINEM REGALLAGER UND LADEGUTTRÄGERPLATTE, SOWIE VERFAHREN ZUM BETRIEB**

(71) Anmelder: Heron Innovations Factory GmbH, 6850 Dornbirn (AT)
(72) Erfinder: BEER, Christian, 6858 Schwarzach (AT)
(74) Vertreter: Riebling, Peter

(57) **Zusammenfassung**

Regal-Hubförderer (2) zur Vereinzelung von Ladegut (6, 7) in einem Regallager (14) mit einer Vielzahl von matrixartig nebeneinander und übereinander angeordneten Ablageplätzen (12), bestehend aus einem schienengebunden fahrbar angetriebenen Transportroboter (20), an dem eine hubgesteuerte Ladeplattform (10) befestigt ist, auf der ein Längsförderer (18) mit Ladegabeln (19) angeordnet ist, die das auf einem Ablageplatz (12) des Regallagers (14) abgestellte Ladegut (6, 7) unterfahren und auf die Ladeplattform (10) aufladen oder von der Ladeplattform (10) abladen, wobei zur System- oder Formatanpassung unterschiedlicher Ladegüter (6, 7) an den Längsförderer (18) des Regal-Hubförderers (2) mindestens eine Ladegutträgerplatte (3) zur Aufladung und zum Tragen des Ladeguts (6, 7) vorhanden ist, die auf dem Ablageplatz (12) anhebbar oder absetzbar ist und die Längsnuten (31) zum Einfahren der Ladegabeln (19) des Längsförderers (18) aufweist, sodass die aufgeladene Last (6, 7) von der darunter angeordneten Ladegutträgerplatte (3) abhebbar und vereinzelbar ist.

## Beschreibung

Die Erfindung betrifft einen Regal-Hubförderer in der Art der Ausführung eines schienengebundenen Transportroboters mit einer Hubplattform nach dem Gegenstand der eigenen EP 3 456 662 A1.

Diese Druckschrift beschreibt einen schienengebundenen Transportroboter mit einem Hebezeug, das in einer Ausnehmung des Transportroboters in vertikaler Richtung heb- und senkbar angeordnet ist und zur Aufnahme eines Ladegutes, z. B. einer Kiste, geeignet ist. Das Hebezeug ist dabei als heb- und senkbar angetriebene Ladeplattform mit mindestens einem darauf angeordneten Längsförderer ausgebildet. Der Längsförderer ist bevorzugt ein Teleskopschlitten, der mit teleskopartig ausfahrbaren Ladegabeln in der Lage ist, in seitlicher horizontaler Richtung über den Außenumriss des Hubförderers hinaus fahren zu können, um ein neben dem Hubförderer auf einem Regalabstellplatz gelagertes Ladegut, z.B. eine Kiste, zu unterfahren und aufzunehmen. Dabei ist die teleskopartig ausfahrbare Ladegabel als angetriebenes Förderband ausgebildet, das auf einem Teleskopschlitten angeordnet ist und bei ausgefahrenem Teleskopschlitten in der Lage ist, das Ladegut bodenseitig zu unterfahren und sich an die Bodenseite des Ladeguts anzulegen.

Die heb- und senkbar angetriebene Ladeplattform des Hubförderers ist im gezeigten Ausführungsbeispiel mithilfe von in der Länge veränderbar angetriebenen Hubbändern an einem auf der Schienenbahn fahrenden und autonom arbeitenden Transportroboter angeordnet. Je nach der Auszugslänge der Hubbänder können dabei mehrere fluchtend untereinander angeordnete Abstellplätze in einem Regallager bedient werden, ohne dass der Transportroboter seine Stellung auf der Schienenbahn verändert.

Wenn der Teleskop-Schlitten mit seinen Ladegabeln das außerhalb des Regallagers abgestellte Ladegut unterfahren hat, wird der Teleskopschlitten zurückgezogen und das aufgenommene Ladegut wird auf die Hubplattform der Ladeplattform aufgezogen. Der Hubförderer kann dann mit dem aufgeladenen Ladegut zu einem anderen Regal-Abstellplatz fahren, die Ladegabeln des Teleskopschlittens in Gegenüberstellung zu dem weiteren Abstellplatz bringen und durch einen Längsantrieb des Teleskopschlittens das auf der Ladeplattform aufgeladene Ladegut auf einem anderen Regalabstellplatz abstellen.

Wegen der weiteren Merkmale eines solchen Regal-Hubförderers wird auf die Beschreibung in der EP 3 456 662 A1 Bezug genommen, deren Inhalt vollinhaltlich von der vorliegenden Erfindungsbeschreibung umfasst sein soll.

Bei dem in der eigenen EP 3 456 662 A1 beschriebenen Stand der Technik war allerdings nachteilig, dass keine Möglichkeit bestand, die Art, die Formgebung und das Format der Last an den Längsförderer anzupassen.

Nachdem es unterschiedlich geformte Ladegüter gibt, die nicht nur als Kisten ausgebildet sind, sondern unterschiedliche Formate, Gewichte und Abmessungen haben, bestand das Problem, unterschiedliche Ladegüter mit dem auf der Ladeplattform angeordneten Längsförderer betriebssicher zu vereinzeln und auf verschiedenen Ablageplätzen eines Regallagers formgerecht abzuladen oder gegebenenfalls wieder aufzuladen.

Der Erfindung liegt deshalb ausgehend von der EP 3 456 662 A1 die Aufgabe zugrunde, einen Regal-Hubförderer mit Vereinzelung von Ladegut in einem Regallager der eingangs genannten Art so weiter zu bilden, dass unterschiedliche Ladegüter, unterschiedlichen Gewichts, Anzahl, Formats und Bodenbeschaffenheit betriebssicher transportiert und abgelegt werden können. Zur Lösung der gestellten Aufgabe ist der Regal-Hubförderer durch die technische Lehre des Anspruches 1 gekennzeichnet.

Eine bevorzugte Verfahrensart zum Betrieb des Regal-Hubförderers ist im unabhängigen Anspruch 12 angegeben.

Bevorzugtes Merkmal der Erfindung ist demnach, dass zur System- oder Formatanpassung unterschiedlicher Ladegüter an den Längsförderer des Regal-Hubförderers mindestens eine Ladegutträgerplatte zur Aufladung und zum Tragen des Lagegutes vorhanden ist, die auf dem Ablageplatz anhebbar oder absetzbar ist und die Längsnuten zum Einfahren der Ladegabeln des Längsförderers aufweist, so dass die aufgeladene Last von der darunter angeordneten Ladegutträgerplatte abhebbar und vereinzelbar ist.

Mit dieser technische Lehre wird der Vorteil erreicht, dass nun unabhängig von der Art, der Formatgebung, dem Gewicht und der Stückzahl des Ladegutes eine einheitliche, genormte und an das Hubfördersystem angepasste Ladegutträgerplatte vorgeschlagen wird, mit der es nun erstmals möglich ist, unterschiedliche Ladegüter aufzunehmen und dafür gesorgt ist, dass ein betriebssicherer Transport und eine betriebssichere Vereinzelung gegeben sind.

Nach einem bevorzugten Merkmal ist die Ladegutträgerplatte im Prinzip wie eine nach oben offene Schachtel oder ein Kasten ausgebildet, wobei sich ausgehend von einer vertieften Bodenfläche ringsumlaufende Seiten- und Stirnwände an die Bodenfläche anschließen, so dass es möglich ist, in der erfindungsgemäßen Ladegutträgerplatte auch einzelne kleinere Stücke eines Ladeguts anzuordnen, wie z. B. Schrauben, Federn, elektronische Bauteile und dergleichen mehr. Die Ladegutträgerplatte ist deshalb nicht nur als Adapterplatte für die Adaption an darauf aufgeladene Ladegüter geeignet, sondern sie kann selbst auch als Ladegutträger verwendet werden, weil sie in einer bevorzugten Ausgestaltung als ein nach oben geöffneter Kasten ausgebildet ist.

Nach dem bevorzugten Merkmal der technischen Lehre des Anspruches 1 ist vorgesehen, dass die Ladegutträgerplatte seitliche, zueinander parallele und im Abstand zueinander angeordnete und nach oben offene Längsnuten aufweist, die zum Einfahren der Ladegabeln des Längsförderers geeignet sind, so dass die aufgeladene Last von der darunter liegenden Ladegutträgerplatte abhebbar und vereinzelbar ist, wenn der Längsförderer mit seinen Ladegabeln in die Längsnuten der Ladegutträgerplatte einfährt und sich direkt an der Bodenseite des aufzunehmenden Ladegutes anlegt.

Nach einem weiteren bevorzugten Merkmal ist es vorgesehen, dass ein ähnliches Hohlprofil, wie es erfindungsgemäß an den Seiten der Ladegutträgerplatte angeordnet ist, auch auf dem Ablageplatz selbst vorhanden ist, so dass auf dem Ablageplatz zwei zueinander parallele und im gegenseitigen Abstand zueinander angeordnete Hohlprofile angeordnet sind, wie es bereits schon in der gattungsgebenden EP 3 456 662 A1 beschrieben ist.

Damit können nach dem Gegenstand des Anspruches 2 zwei übereinander liegende Ladeebenen gebildet werden, nämlich eine obere Ladeebene, die durch das Hohlprofil der Ladegutträgerplatte gebildet ist und eine darunter liegenden, untere Ladeebene, die durch das Hohlprofil des Ablageplatzes gebildet ist.

Mit diesen vertikal übereinander liegenden Ladeebenen ergibt sich die Möglichkeit, dass je nach der Hubeinstellung der Ladeplattform der Längsförderer mit seinen Ladegabeln entweder in Gegenüberstellung zu dem oberen Hohlprofil der Ladegutträgerplatte verfahren werden kann, um das auf der Ladegutträgerplatte aufliegende Ladegut unmittelbar bodenseitig zu erfassen, anzuheben und auf die Ladeplattform zu transportieren.

Wird hingegen der Hub der Ladeplattform so eingestellt, dass der Längsförderer mit seinen Ladegabeln in direkter Gegenüberstellung zu dem ablageplatzseitigen Hohlprofil gelangt, gelingt es damit, dass die Ladegabeln die Ladegutträgerplatte untergreifen und mitsamt dem aufgeladenen Ladegut transportieren.

Die Ladegutträgerplatte hat demnach nicht nur die Aufgabe einer Systemanpassung in der Art einer Adapterplatte an unterschiedliche Formate von Bodenflächen von Ladegütern, sondern darüber hinaus gibt die Ladegutträgerplatte die Möglichkeit, kleinere Gegenstände direkt im Aufnahmeraum der Ladegutträgerplatte aufzunehmen und zu transportieren und es ist ferner möglich, mehrere Ladegutträgerplatten übereinander zu stapeln und als Stapel zu transportieren. Natürlich ist es auch möglich, Ladegutträgerplatten ohne aufgeladenes Ladegut zu transportieren und auf unterschiedlichen regallagerseitigen Ablageplätzen abzulegen.

Damit ergibt sich die Möglichkeit einer standardisierten Schnittstelle zwischen dem Regal-Hubförderer und dem Ladegut, weil mit dem gleichen Regal-Hubförderer und der daran angebundenen Ladeplattform ein Entstapeln, Stapeln und Transportieren mit dem gleichen Gerät möglich ist. Dabei wird das Ladegut geschont, denn es wird nicht selbst gefördert, sondern es wird die Ladegutträgerplatte gefördert, so dass mit der technischen Lehre der Erfindung es möglich ist, auch sensible Ladegüter zu transportieren, wie z. B. Bettflaschen, Batterien oder auch biegeschlaffe Teile, wie Kunststoffblister oder folienverpackte Teile, die empfindlich gegen Beschädigung sind.

Mit der Verwendung einer solchen Ladegutträgerplatte ergibt sich nunmehr die Möglichkeit, dass am Ende der Transportstrecke, nämlich im Auslaufbereich eines Regallagers eine Rollenbahn angeordnet ist, die zur Vereinzelung des aufgeladenen Ladegutes bestimmt ist und das Ladegut auf der Rollenbahn ohne die Ladegutträgerplatte abgeladen werden kann, um sofort einer Verpackungsstation zugeführt zu werden.

Von besonderem Vorteil ist, dass ein Regal-Hubförderer mit einer über Hubbänder daran angebundenen, hubgesteuerten Ladeplattform verwendet wird, die Hubabstände bis zu 5 Meter ermöglicht. Auf diese Weise ist es möglich, im vertikalen Abstand von 5 Meter übereinander liegende Ablageplätze zu bedienen, ohne dass eine Verfahrung des Transportroboters notwendig ist. Durch die feinfühlige Hubsteuerung der Ladeplattform mit dem darauf befestigten Längsförderer ist es deshalb erstmals möglich, wahlweise das Ladegut direkt von der Ladegutträgerplatte zu entnehmen und die Ladegutträgerplatte an ihrem Ablageort zu belassen oder - bei Veränderung des Hubabstandes - mit den Ladegabeln des Längsförderers die Ladegutträgerplatte zu untergreifen und diese mitsamt dem aufgeladenen Ladegut zu transportieren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisierte Darstellung eines Regal-Hubförderers mit einem auf der Ladeplattform angeordneten Längsförderers, der in Lade- oder Entladestellung ist;
- Figur 2:: die gleiche Darstellung wie Figur 1 in Seitenansicht und teilweise im Schnitt;
- Figur 3:: eine schematisierte Darstellung von zwei vertikal übereinander angeordneten Ablageplätzen in einem Regallager in einem ersten Verfahrensschritt, wo das Ladegut ohne Ladegutträgerplatte auf einem unteren Ablageplatz des Regallagers abgeladen ist;
- Figur 4:: die gleiche Darstellung wie Figur 3 in Vorderansicht;
- Figur 5:: der zweite Verfahrensschritt, bei dem mit dem Längsförderer das Ladegut von dem unteren Ablageplatz auf eine auf dem oberen Ablageplatz lagernde Ladegutträgerplatte transportiert wurde;
- Figur 6:: die Stirnansicht einer Ladegutträgerplatte;
- Figur 7:: die perspektivische Ansicht einer Ladegutträgerplatte nach Figur 6;
- Figur 8:: die Seitenansicht der Ladegutträgerplatte nach Figur 7;
- Figur 9:: die Draufsicht auf die Ladegutträgerplatte nach Figur 7;
- Figur 10:: die perspektivische Seitenansicht der Ladegutträgerplatte ähnlich der Figur 7;
- Figur 11:: die bodenseitige Ansicht der Ladegutträgerplatte nach einer der Figuren 6 bis 10.

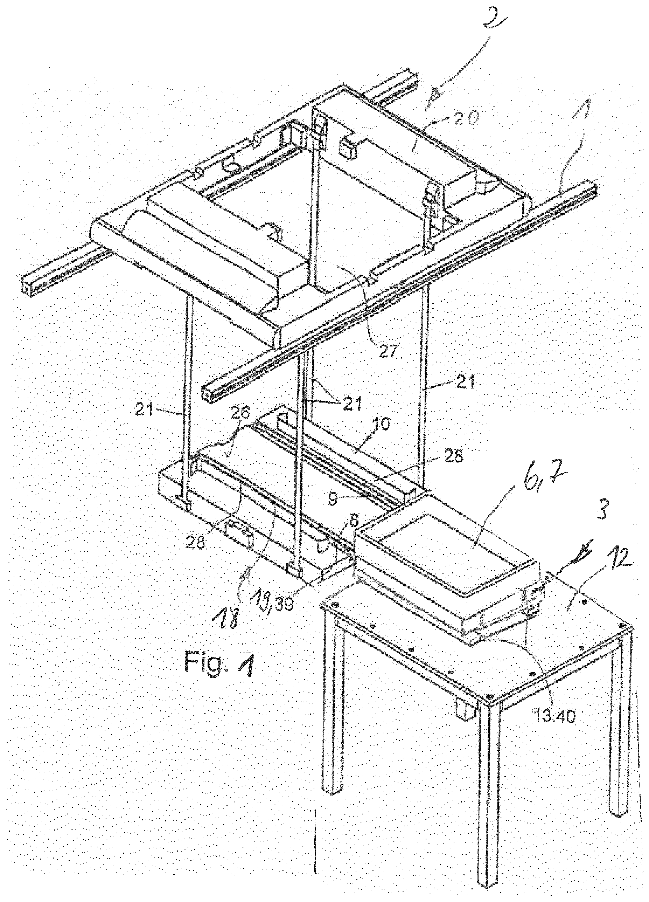

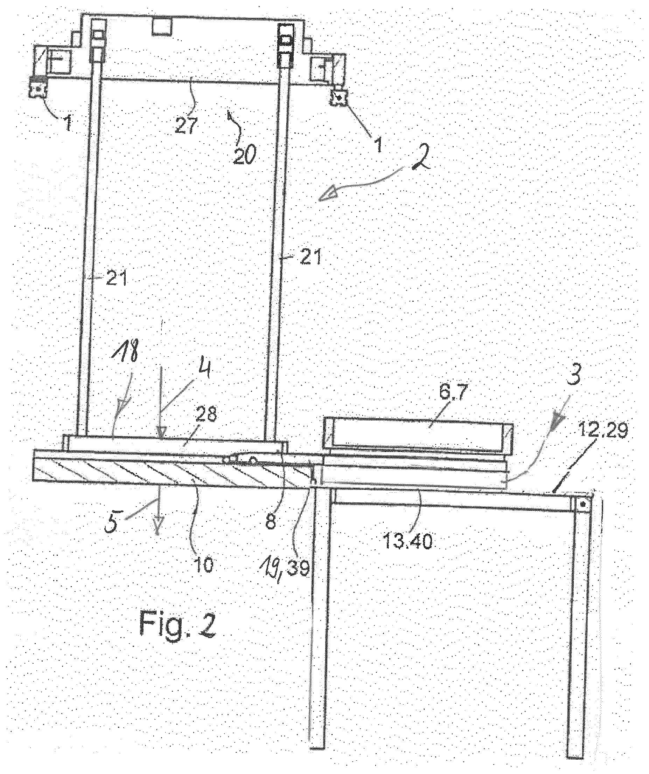

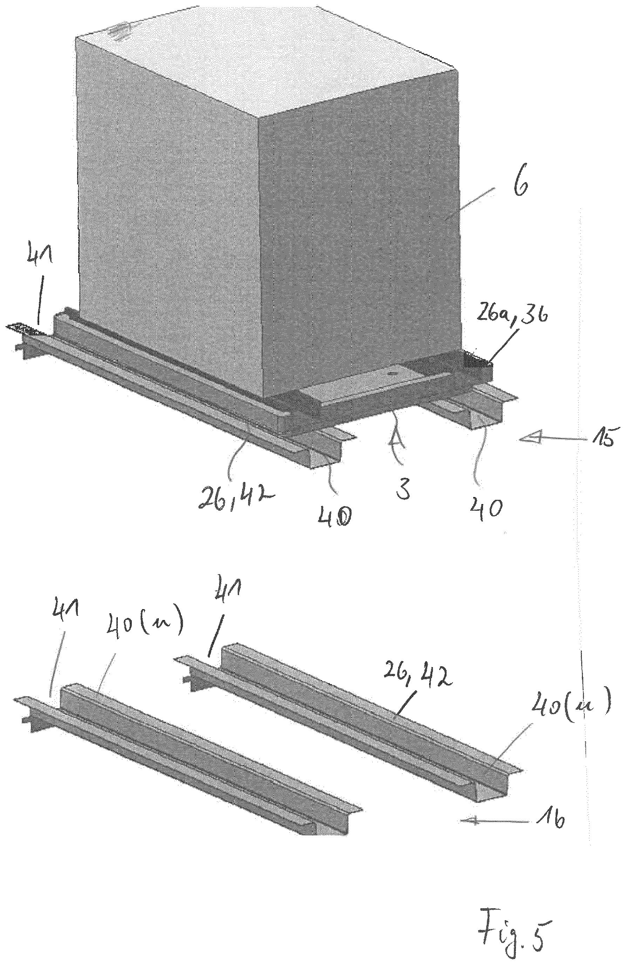

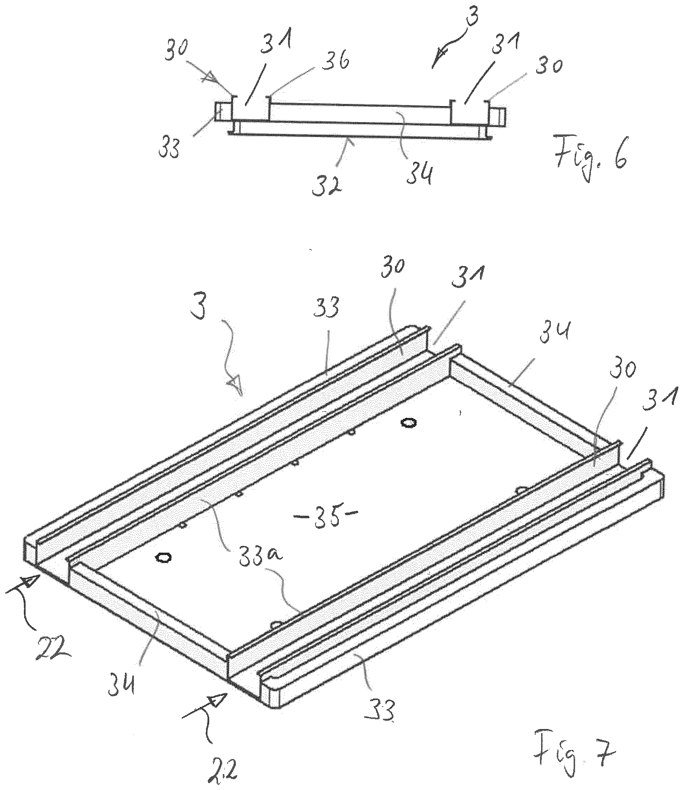

In den Figuren 1 und 2 wurde die Anordnung des Regal-Hubförderers entsprechend den Zeichnungen Figur 5 und Figur 6 der EP 3 456 662 A1 verwendet, wobei jedoch die zusätzliche Verwendung einer Ladegutträgerplatte 3 eingezeichnet ist. Die weiteren Bezugszeichen der Figuren 1 und 2 beziehen sich auf die gleichen Teile wie in der EP 3 456 662 A1 beschrieben.

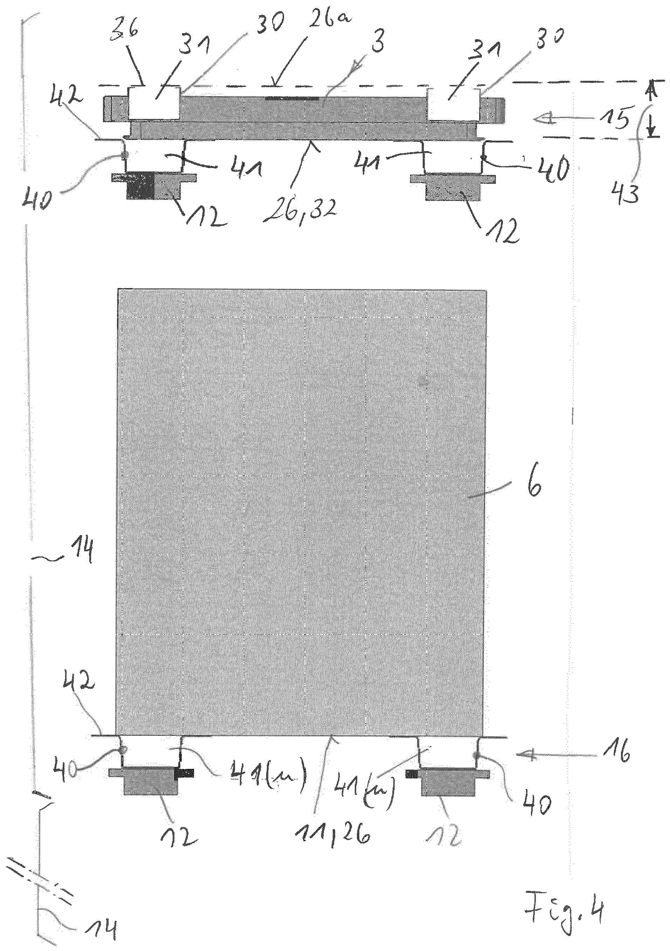

Die Figuren 1 und 2 nach der Erfindung zeigen lediglich symbolisch einen Ablageplatz 12, der dort als Tisch dargestellt ist, weil in einer bevorzugten Ausführung eine matrixartige Anordnung von übereinander und nebeneinander angeordneten Ablageplätzen 12 in einem Regallager 14 vorhanden sind, wobei als symbolisches Bespiel in Figur 4 zwei übereinander liegende Ablageplätze 15, 16 in einem solchen Regallager 14 dargestellt sind.

Ein autonom arbeitender Transport-Roboter 20 ist gemäß den Figuren 1 und 2 frei autonom verfahrbar auf einer Schienenbahn 1 angeordnet und ist als Regal-Hubförderer 2 ausgebildet, indem in einer mittleren Ausnehmung 27 des Transport-Roboters 20 eine Hubplattform angeordnet ist, die aus einer Ladeplattform 10 besteht, die mit Hilfe von Hubbändern 21 heb- und senkbar in den Pfeilrichtungen 4 und 5 (siehe Figur 2) am Transport-Roboter 20 angeordnet ist.

Auf der Ladeplattform 10 ist ein Längsförderer 18 angeordnet, der im gezeigten Ausführungsbeispiel aus zwei zueinander parallelen, in Längsrichtung angetriebenen Förderbändern 8, 9 besteht, die auf einem Teleskopschlitten 39 angeordnet sind, so dass die teleskopierbaren Förderbänder 8, 9 als Ladegabeln 19 wirken, die aus der Seite der Ladeplattform 10 herausgefahren werden können, um ein auf dem Ablageplatz 12 abgelegtes Ladegut 6, 7 zu erfassen und zu transportieren.

Im gezeigten Ausführungsbeispiel besteht das Ladegut 6 aus einer Kiste, in der nicht näher dargestellte Gegenstände angeordnet sind.

Erfindungsgemäß sind nun zwei unterschiedliche Ladeebenen 26, 26a vorhanden, denn das Ladegut 6, 7 liegt auf der Oberseite einer Ladegutträgerplatte 3 auf, die ihrerseits mit ihrer Unterseite auf einem auf dem Ablageplatz 12 angeordneten Ablagepanel 13 aufliegt, welches aus zwei zueinander parallelen und sich in Längsrichtung erstreckenden Hohlprofilen 40 besteht.

Es ist noch dargestellt, dass die beiden teleskopierbaren Förderbänder 8, 9 von Seitenführungen 28 eingegrenzt sind, so dass die von den Förderbändern 8, 9 auf die Ladeplattform 10 aufgeladene Last auf den Seitenführungen 28, 29 aufliegt.

Die Figur 2 zeigt die Seitenansicht der Darstellung in Figur 1, wo erkennbar ist, dass die in einem ersten Verfahrensschritt in Pfeilrichtung 4 nach unten gefahrene Ladeplattform 10 mit dem Längsförderer 18 in Gegenüberstellung zu der Längsnuten 31 an der Seitenwand eines Hohlprofils 30 der Ladegutträgerplatte 3 gelangt, um so die auf der Ladegutträgerplatte 3 aufgeladene Last 6, 7 mitsamt der Ladegutträgerplatte 3 auf die Ladeplattform 10 zu ziehen.

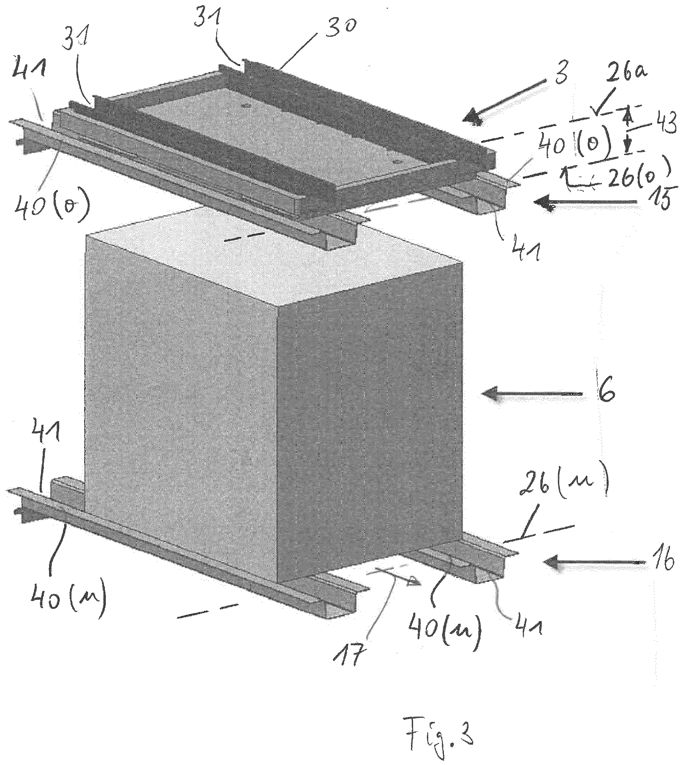

In den Figuren 3 und 4 ist eine solcher Umsetzvorgang einer auf einem unteren Ablageplatz 16 auf dem dortigen Hohlprofil 40 lagernden Ladegut 6 dargestellt, wodurch eine untere Ablageebene 26 (u) geschaffen ist und das Ladegut 6 auf nach außen abgebogenen Profilschenkeln 42 des Hohlprofils 40 aufsitzt, welche die Bodenseite des Ladegutes 6 unterstützen (siehe Figur 4).

Auf dem oberen Ablageplatz 15 ist gemäß den Figuren 3 und 4 eine Ladegutträgerplatte 3 auf dem gleichen abstellplatzseitigen Hohlprofil 40 aufgelegt und aus den Figuren 3, 4 und 5 wird ein Umsetzvorgang von einem Ladegut 6 von dem unteren Ablageplatz 16 auf eine im oberen Ablageplatz 15 angeordnete Ladegutträgerplatte 3 näher erläutert.

Die Figuren 3 und 4 zeigen, dass die Ladegabeln 19 des Längsförderers 18 wahlweise - gemäß dem eingezeichneten Hubabstand 43 der Ladeplattform 10 entweder in die obere Längsnut 31 der Ladegutträgerplatte 3 eingreifen können, um so direkt die Bodenfläche 11 des Ladegutes 6 zu untergreifen und zu transportieren. Damit wird eine obere Ablageebene 26a gebildet.

Ebenso zeigen die Figuren 3 und 4, dass auch eine untere Ladeebene 26 vorhanden ist, nämlich dann, wenn die Ladegabeln 19 des Längsförderers 18 in die Längsnuten 41 im Hohlprofil 40 des Ablageplatzes 12 einfahren. In diesem Fall untergreifen die Ladegabeln 19 die Unterseite der Ladegutträgerplatte 3, so dass damit die auf der Ladegutträgerplatte 3 aufgeladene Last 6, 7 zusammen mit der Ladegutträgerplatte 3 transportiert werden kann.

Kurz gefasst besteht die technische Lehre des Anspruches 1 aus einem Regal-Hubförderer 2 zur Vereinzelung von Ladegut 6, 7 in einem Regallager 14 mit einer Vielzahl von nebeneinander und übereinander angeordneten Ablageplätzen 12, bestehend aus einem schienengebundenen, fahrbar angetriebenen Transportroboter 20, an dem eine heb- und senkbar angetriebene Ladeplattform 10 befestigt ist, auf der ein Längsförderer 18 mit in horizontaler Richtung verschiebbar angetriebenen Ladegabeln 19 angeordnet ist, die das auf einem Hohlprofil 40 in einem Ablageplatz 12 des Regallagers 14 abgestellte Ladegut 6, 7 im Bereich von in Längsrichtung ausgerichteten, nach oben hin offenen Längsnuten 41 des Hohlprofils 40 unterfahren und auf die Ladeplattform 10 aufladen oder von der Ladeplattform 10 abladen.

Eine Ladegutträgerplatte ist dadurch charakterisiert, dass sie zur System- oder Formatanpassung unterschiedlicher Ladegüter 6, 7 an den Längsförderer 18 des Regal-Hubförderers 2 geeignet ist und mindestens eine Ladegutträgerplatte 3 zur Aufladung und zum Tragen des Ladeguts 6, 7 vorhanden ist, die auf dem ablageplatzseitigen Hohlprofil 40 aufsetzbar ist und die in einem nach oben hin offenen Hohlprofil 30 Längsnuten 31 zum Einfahren der Ladegabeln 19 aufweist. Damit kann das Ladegut 6, 7 je nach Hubstellung der Ladeplattform 10 entweder ohne die Ladegutträgerplatte 3 oder mit Ladegutträgerplatte 3 auf einem regalseitigen Abstellplatz 12 abgesetzt werden. Es kann sogar vorgesehen sein, nur die Ladegutträgerplatte 3 - ohne aufgeladenes Ladegut 6, 7 - auf einem regalseitigen Ablageplatz 12 abzulegen.

Im Übergang von der Figur 4 zur Figur 5 ist ein solcher Umsetzvorgang einer Last 6, 7 von dem unteren Ablageplatz 16 auf einen oberen Ablageplatz 15 schematisiert dargestellt. Dabei sind die Ladegabeln 19 des Längsförderers 18 in Figur 4 in die Längsnuten 41 des Hohlprofils 40 am unteren Ablageplatz 16 eingefahren und legen sich lastübertragend an der Bodenseite 11, 26 des Ladegutes 6 an. Durch Einschaltung des Handantriebes der beiden parallel und synchron zueinander angetriebenen Förderbänder 8, 9 wird somit das Ladegut 6 in Pfeilrichtung 17 (siehe Figur 3) auf die Ladeplattform 10 gezogen und sitzt vorzugsweise auf der Oberseite der Seitenführungen 28 auf. Danach wird die Hubsteuerung des Regal-Hubförderers 2 betätigt, um die Ladeplattform 10 um den vertikalen Abstand zwischen zwei übereinander liegenden Ablageplätzen 15, 16 zu überbrücken. Sobald die Ladeplattform 10 in Gegenüberstellung zu dem oberen Ablageplatz 15 gelangt ist, was mit einer sensorgesteuerten Steuerung erkannt wird, werden die Ladegabeln 19 in Gegenrichtung zur eingezeichneten Pfeilrichtung angetrieben, um so die auf der Ladeplattform 10 aufgeladene Last 6, 7 auf die auf dem oberen Ablageplatz 15 lagernde Ladegutträgerplatte 3 aufzuladen. Dabei fahren die Ladegabeln 19 in die Längsnuten 31 der Ladegutträgerplatte 3 ein und weil sie die Last 6, 7 tragen, wird die Last 6, 7 auf der oberen Ladeebene 26a, die durch die Oberseite der Ladegutträgerplatte 3 gebildet ist, aufgeladen.

Zur besonders günstigen Lastübertragung der aufgeladenen Last ist es vorgesehen, dass die ein Hohlprofil 30 ausbildenden Längsnuten 31 mit in horizontaler Richtung abgebogenen Profilschenkeln 36 versehen sind, um eine größere Auflagefläche für die Bodenseite 11 der Last 6, 7 zu erreichen.

Soll die auf dem oberen Ablageplatz 15 auf die Ladegutträgerplatte 3 aufgeladene Last 6, 7 zusammen mit der Ladegutträgerplatte 3 entfernt werden, dann gilt die Beschreibung nach Figur 5 in Verbindung mit der Stirnansicht der Ladegutträgerplatte in Figur 4 oben.

Wenn demnach die Ladegutträgerplatte 3 mit der aufgeladenen Last 6, 7 vom oberen Ablageplatz 15 entfernt werden soll, fahren die Ladegabeln 19 in das ablageplatzseitige Hohlprofil 40 und die dortigen Längsnuten 41 ein, so dass sich die Oberseite der beiden Förderbänder 8, 9 an der Unterseite der Bodenfläche 32 der Ladegutträgerplatte 3 reibschlüssig anlegen. Damit kann die Ladegutträgerplatte 3 zusammen mit der aufgeladenen Last 6, 7 von der ablageseitigen Profilanordnung mit den Hohlprofilen 40 heruntergezogen werden.

Mit der Hubeinstellung des Hubes der Ladegutträgerplatte 3 in den Pfeilrichtungen 4 oder 5 wird somit entsprechend dem Hubabstand 43 in Figur 4 oben entweder die obere Ladeebene 26a oder die untere Ladeebene 26 angesteuert.

Die Figuren 6 bis 11 zeigen eine bevorzugte Ausführungsform einer Ladegutträgerplatte 3, wobei die Ladegutträgerplatte 3 bevorzugt als nach oben offene Kiste oder Schachtel aus Kunststoff ausgebildet ist, die eine Bodenfläche 32 aufweist. Die Bodenfläche 32 wird ringsum durch äußere Seitenwände 33 begrenzt, die vorderseitig durch Stirnwände 34 verbunden sind.

Das vorher erwähnte Hohlprofil 30 - mit Ausbildung der Längsnuten 31 - wird dabei zwischen den äußeren Seitenwänden 33 und parallel hierzu im Abstand verlaufenden inneren Seitenwänden 33a gebildet. Somit fahren beispielsweise die Ladegabeln 19, welche durch die Förderbänder 8, 9 gebildet sind, in Pfeilrichtung 22 in die im Hohlprofil 30 angeordneten Längsnuten 31 ein, wobei dafür gesorgt ist, dass die Höhe der Förderbänder 8, 9 etwas höher ist, als die Profilhöhe des Hohlprofils 30, um zu gewährleisten, dass die Bodenfläche 32 der Last 6, 7 reibschlüssig auf der Oberseite der Förderbänder 8, 9 aufliegt.

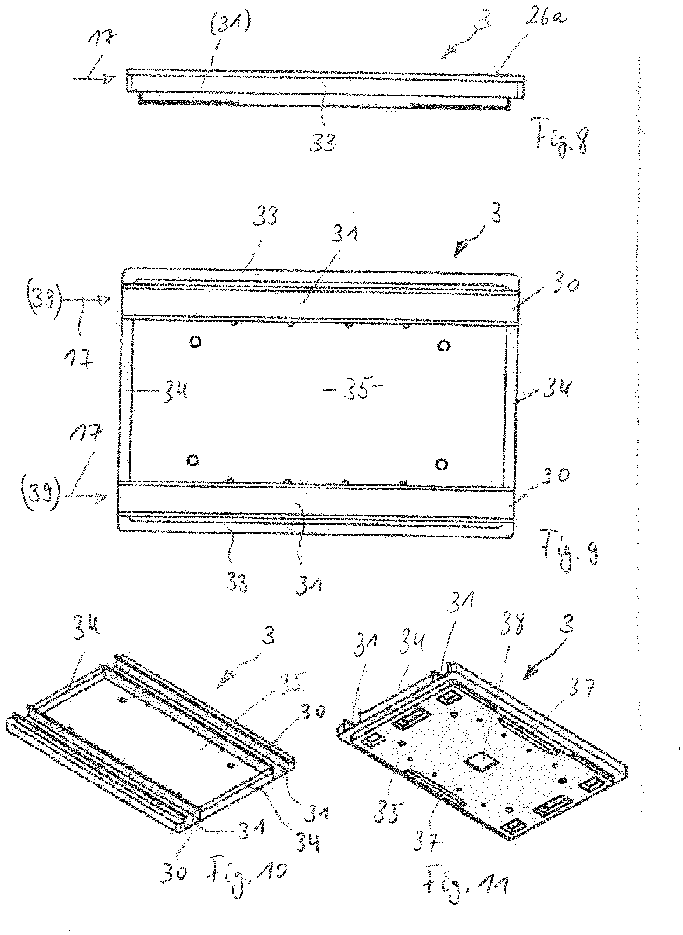

Die Seitenwände 33, 33a und die Stirnwände 34 umgreifen somit eine Bodenwand 35, die zur Aufnahme von zu transportierenden Kleinteilen oder empfindlichen Gegenständen geeignet ist. Gemäß Figur 11 kann es vorgesehen sein, dass an der Bodenseite Längssicken 37 angeordnet sind, um eine Stapelbarkeit übereinander gestapelter Ladegutträgerplatten 3 zu gewährleisten, ohne dass diese sich gegeneinander verschieben. Ebenso kann es vorgesehen sein, dass in der Unterseite der Bodenwand 35 ein RFID-Chip 38 angeordnet ist, um die Ladegutträgerplatte 3 durch geeignete berührungslose Sensoren identifizieren zu können.

Die Identitätsdaten der Ladegutträgerplatte 3 sind bevorzugt im RFID-Chip gespeichert.

Ebenso kann der RFID-Chip oder weitere Sensoren an der Ladegutträgerplatte 3 angeordnet werden, um beispielsweise eine Ortung der Ladegutträgerplatte 3 im Raum zu ermöglichen und deren Stellung auf der Schienenbahn 1 oder im Regallager 14 festzustellen.

### Zeichnungslegende

- 1: Schienenbahn
- 2: Regal-Hubförderer
- 3: Ladegutträgerplatte
- 4: Pfeilrichtung
- 5: Pfeilrichtung
- 6: Ladegut
- 7: Kiste
- 8: Förderband
- 9: Förderband
- 10: Ladeplattform
- 11: Bodenfläche (von 6)
- 12: Ablagefach
- 13: Ablage-Paneel
- 14: Regallager
- 15: oberer Ablageplatz
- 16: unterer Ablageplatz
- 17: Pfeilrichtung
- 18: Längsförderer
- 19 20: Transport-Roboter
- 21: Hubband
- 22: Pfeilrichtung
- 23 24 25 26: Ladeebene unten
- 26a: Ladeebene oben
- 27: Ausnehmung (in 2)
- 28: Seitenführung
- 29: Ablageebene (von 12)
- 30: Hohlprofils (von 3)
- 31: Längsnut (von 30)
- 32: Bodenfläche (von 30)
- 33: Seitenwand (außen)
- 33a: Seitenwand (innen)
- 34: Stirnwand
- 35: Bodenwand
- 36: Profilschenkel
- 37: Längssicke
- 38: RFID-Chip
- 39: Teleskopschlitten
- 40: Hohlprofil (von 13) oben und unten
- 41: Längsnut (von 40)
- 42: Profilschenkel
- 43: Hubabstand (zw. 26 u. 26a)

## Patentansprüche

1. Regal-Hubförderer (2) zur Vereinzelung von Ladegut (6, 7) in einem Regallager (14) mit einer Vielzahl von matrixartig nebeneinander und übereinander angeordneten Ablageplätzen (12), bestehend aus einem schienengebunden fahrbar angetriebenen Transportroboter (20), an dem eine hubgesteuerte Ladeplattform (10) befestigt ist, auf der ein Längsförderer (18) mit Ladegabeln (19) angeordnet ist, die das auf einem Ablageplatz (12) des Regallagers (14) abgestellte Ladegut (6, 7) unterfahren und auf die Ladeplattform (10) aufladen oder von der Ladeplattform (10) abladen, **dadurch gekennzeichnet, dass** zur System- oder Formatanpassung unterschiedlicher Ladegüter (6, 7) an den Längsförderer (18) des Regal-Hubförderers (2) mindestens eine Ladegutträgerplatte (3) zur Aufladung und zum Tragen des Ladeguts (6, 7) vorhanden ist, die auf dem Ablageplatz (12) anhebbar oder absetzbar ist und die Längsnuten (31) zum Einfahren der Ladegabeln (19) des Längsförderers (18) aufweist, sodass die aufgeladene Last (6, 7) von der darunter angeordneten Ladegutträgerplatte (3) abhebbar und vereinzelbar ist.

2. Regal-Hubförderer (2) nach Anspruch 1, **dadurch gekennzeichnet, dass** das Ladegut (6, 7) wahlweise auf einer durch die Ladegutträgerplatte (3) gebildeten oberen Ladeebene (26a) oder auf einer darunter liegenden unteren Ladeebene (26) des Ablageplatz (12) absetzbar oder aufnehmbar ist.

3. Regal-Hubförderer (2) nach Anspruch 2, **dadurch gekennzeichnet, dass** die obere Ladeebene (26a) durch ein einseitig offenes Hohlprofil (30) in der Ladegutträgerplatte (3) gebildet ist und dass die untere Ladeebene (26) durch ein einseitig offenes Hohlprofil (40) auf dem Ablageplatz (12) gebildet ist.

4. Regal-Hubförderer (2) nach Anspruch 3, **dadurch gekennzeichnet, dass** die nach oben hin offenen Längsnuten (41) des ablageplatzseitigen Hohlprofils (40) annähernd vertikal zu den darüber angeordneten Längsnuten (31) des plattenseitigen Hohlprofils (30) fluchten.

5. Regal-Hubförderer (2) nach einem der Ansprüche 1 bis 4 , **dadurch gekennzeichnet, dass** der vertikale Abstand zwischen den annähernd vertikal zueinander fluchtenden Längsnuten (31, 41) von Ladegutträgerplatte (3) und ablageplatzseitigen Hohlprofil (40) zwei voneinander beabstandete Ladeebenen (26, 26a) für die Ladegabeln (19) des Längsförderers (18) bilden.

6. Regal-Hubförderer (2) nach einem der Ansprüche 1 bis 5, **dadurch gekennzeichnet, dass** der Längsförderer (18) auf der Ladeplattform (10) wahlweise in Gegenüberstellung mit dem abstellplatzseitigen Hohlprofil (40) oder dem plattenseitigen Hohlprofil (30) bringbar ist.

7. Regal-Hubförderer (2) nach einem der Ansprüche 1 bis 6, **dadurch gekennzeichnet, dass** die die Ladeebene (26, 26a) bildenden, lasttragenden Oberflächen der Hohlprofile (30, 40) durch in horizontaler Richtung abgebogene Profilschenkel (36, 42) gebildet sind.

8. Regal-Hubförderer (2) nach einem der Ansprüche 1 bis 7, **dadurch gekennzeichnet, dass** an oder in der Ladegutträgerplatte (3) ein der elektronischen Lagenerfassung und/oder Identifizierung dienender RFID-Chip (38) angeordnet ist.

9. Ladegutträgerplatte (3) für einen Regal-Hubförderer (2) nach mindestens einem der vorhergehenden Ansprüche, **dadurch gekennzeichnet, dass** sie aus einem etwa rechteckigen, nach oben hin offenen, etwa schachtel- oder kastenförmigen Kunststoffkörper besteht, und dass die zum Einfahren der Ladegabeln (19) bestimmten Längsnuten (31) im Hohlprofil (30) im Zwischenraum zwischen äußeren und inneren Seitenwänden (33, 33a) angeordnet sind.

10. Ladegutträgerplatte (3) nach Anspruch 9, **dadurch gekennzeichnet, dass** an der Oberseite des Hohlprofils (30) in horizontaler Richtung abgebogene lasttragende Profilschenkel (36) angeordnet sind, welche die obere Ladeebene (26a) bilden.

11. Ladegutträgerplatte (3) nach einem der Ansprüche 9 oder 10, **dadurch gekennzeichnet, dass** die Ladegutträgerplatten (3) mittels ineinandergreifenden Noppen und/oder Vorsprüngen verschiebungsgesichert übereinander stapelbar ausgebildet sind.

12. Verfahren zum Betrieb eines Regal-Hubförderers (2) zur Vereinzelung von Ladegut (6, 7) in einem Regallager (14) mit einer Vielzahl von nebeneinander und übereinander angeordneten Ablageplätzen (12), bestehend aus einem schienengebunden fahrbar angetriebenen Transportroboter (20), an dem eine hubgesteuerte Ladeplattform (10) befestigt ist, auf der ein Längsförderer (18) mit Ladegabeln (19) angeordnet ist, die das auf einem Ablageplatz (12) des Regallagers (14) abgestellte Ladegut (6, 7) unterfahren und auf die Ladeplattform (10) aufladen oder von der Ladeplattform (10) abladen, **dadurch gekennzeichnet, dass** zur System- oder Formatanpassung unterschiedlicher Ladegüter (6, 7) an den Längsförderer (18) des Regal-Hubförderers (2) mindestens eine Ladegutträgerplatte (3) zur Aufladung und zum Tragen des Ladeguts (6, 7) vorhanden ist, die auf dem Ablageplatz (12) anhebbar oder absetzbar ist und die Längsnuten (31) zum Einfahren der Ladegabeln (19) aufweist, sodass die aufgeladene Last (6, 7) von der darunter angeordneten Ladegutträgerplatte (3) abhebbar und vereinzelbar ist.

13. Verfahren nach Anspruch 12, **dadurch gekennzeichnet, dass** in einem Verfahrensschritt die Ladegabeln (19) des Längsförderers (18) unter die Ladegutträgerplatte (3) einfahren und diese allein oder mit einer aufgeladenen Last (6, 7) anheben und auf die Ladeplattform (10) transportieren oder in einem alternativen Verfahrensschritt, dass die Ladegabeln (19) des Längsförderers (18) durch Eingriff in die Längsnuten (31) der Ladegutträgerplatte (3) direkt die Bodenseite der Last (6, 7) unterfahren und die Last (6, 7) aufnehmen.

14. Verfahren nach Anspruch 12 oder 13, **dadurch gekennzeichnet, dass** durch die übereinander gestapelte Anordnung von einem ablageplatzseitigen Hohlprofil (40) und einem darüber angeordneten plattenseitigen Hohlprofil zwei im Hubabstand (43) des Längsförderers (18) zueinander versetzte Ladeebenen (26, 26a) gebildet sind, die mittels der Hubeinstellung der Ladeplattform (10) ansteuerbar sind.

15. Verfahren nach Anspruch 14, **dadurch gekennzeichnet, dass** der Hubabstand (43) zwischen den beiden Ladeebenen (26, 26a) auf dem Ablageplatz (12) durch eine Längeneinstellung der Hubbänder (21) am Transport-Roboter (20) steuerbar ist.

16. Verfahren nach Anspruch 15, **dadurch gekennzeichnet, dass** die Erfassung der Gegenüberstellung der Ladeplattform (10) zum Ablageplatz (12) mithilfe von RFID-Chips (38) erfolgt.

17. Verfahren nach einem der Ansprüche 14 oder 15, **dadurch gekennzeichnet, dass** die Erkennung der Gegenüberstellung der Ladeplattform (10) wahlweise gegenübet der abstellplatzseitigen Hohlprofil (40) oder dem plattenseitigen Hohlprofil (30) mithilfe von optischen und/oder induktiven und/oder kapazitiven Näherungssensoren erfolgt.
